# EUROPÄISCHE PATENTSCHRIFT

(11) **EP 1 430 231 B1**
(45) Veröffentlichungstag und Bekanntmachung des Hinweises auf die Patenterteilung: **16.03.2005**
(21) Anmeldenummer: 02772241.2
(22) Anmeldetag: 30.08.2002
(51) Int. Cl.: F16D 48/06, B60K 41/24

(54) **VERFAHREN ZUR KUPPLUNGSBETÄTIGUNG BEI NIEDRIGEN TEMPERATUREN**
METHOD FOR ACTUATING A CLUTCH AT LOW TEMPERATURES
PROCEDE D'ACTIONNEMENT D'UN EMBRAYAGE A BASSE TEMPERATURE

(30) Priorität: 28.09.2001 DE 10148203
(43) Veröffentlichungstag der Anmeldung: 23.06.2004
(73) Patentinhaber: ZF FRIEDRICHSHAFEN AG, 88038 Friedrichshafen (DE)
(72) Erfinder: WINKEL, Matthias, 88250 Weingarten (DE); EBNER, Otto, 88048 Friedrichshafen (DE); SCHWEIGER, Klaus, 88046 Friedrichshafen (DE); RÜCHARDT, Christoph, 88131 Bodolz (DE); SCHWENGER, Andreas, 38446 Wofsburg/Reislingen (DE); GANSOHR, Markus, 88682 Neufrach (DE); KNOBLAUCH, Thomas, 66123 Saarbrücken (DE)
(86) Internationale Anmeldenummer: PCT/EP2002/009712
(87) Internationale Veröffentlichungsnummer: WO 2003/029681

(56) Entgegenhaltungen:
- DE-A- 10 047 855
- US-A- 5 190 130

## Beschreibung

Die vorliegende Erfindung betrifft ein Verfahren zur Kupplungsbetätigung für eine hydraulisch betätigbare Kupplung bei niedrigen Temperaturen gemäß dem Oberbegriff des Patentanspruchs 1.

Bei einem hydraulisch betätigten Kupplungssystem, wie es oft bei Kraftfahrzeugen zum Einsatz kommt, besteht vor allem bei sehr tiefen Temperaturen das Problem, dass die Kupplung nicht schnell genug geöffnet werden kann. So kann es beispielsweise vorkommen, dass bei einer Vollbremsung der Motor abgewürgt wird. Der Grund dafür ist die hohe Viskosität des Öls bei tiefen Temperaturen.

Aus der DE 196 39 377 ist eine Kupplungssteuerung für eine automatische Kupplung bekannt, bei der das übertragbare Kupplungsmoment bei Gängen bzw. Fahrstufen mit hohem Übersetzungsverhältnis zwischen Motordrehzahl und Drehzahl der Antriebsräder und/oder bei geringer Fahrgeschwindigkeit das jeweilige Motormoment um ein geringeres Maß überschreitet als bei Gängen bzw. Fahrstufen mit geringerem Übersetzungsverhältnis und/oder bei höherer Fahrgeschwindigkeit. Diese motorische Kupplungsmomentennachführung dient der Komfortverbessserung und der Schaltzeitminimierung.

Des weiteren beschreibt die US 6,024,673 eine bremsabhängige Kupplungsöffnung, bei der ein Steuergerät die Kupplung mit einer bestimmten Verzögerung während eines Bremsvorgangs öffnet.

US-A-5 190 130 offenbart ein Verfahren nach dem Oberbegriff des Anspruchs 1 wobei unter einer vorbestimmtes Temperatur die Kupplung geöffnet wird.

Der vorliegenden Erfindung liegt die Aufgabe zugrunde, ein Verfahren zur Kupplungsbetätigung bei niedrigen Temperaturen anzugeben, welches eine einwandfreie Funktionsweise der Kupplung gewährleistet.

Diese Aufgabe wird durch die Merkmale des kennzeichnenden Teils des Patentanspruchs 1 gelöst. Weitere Ausgestaltungen und Varianten gehen aus den Unteransprüchen hervor.

Demnach wird vorgeschlagen, insbesondere bei niedrigen Temperaturen eine situationsabhängige Voröffnung der Kupplung zu implementieren, wenn eine kommende Bremsung wahrscheinlich ist. Die Wahrscheinlichkeit einer Bremsung besteht z.B. dann, wenn der Fahrer vom Fahrpedal geht. In einer derartigen Situation wird erfindungsgemäß die Kupplung vorgeöffnet, sodass sie nur noch etwas mehr als das aktuelle Moment des Motors überträgt. Wenn anschließend eine Bremsung erfolgt, ist ein Teil des Kupplungsweges schon zurückgelegt, so dass trotz der niedrigen Verstellgeschwindigkeit aufgrund der Viskosität die Kupplung rechtzeitig geöffnet wird, wodurch der Motor vor dem Abwürgen geschützt wird.

Eine Voröffnung der Kupplung erfolgt vorteilhafterweise nur bei niedrigen Temperaturen, bei denen aufgrund der hohen Viskosität der Hydraulikflüssigkeit die Kupplungsaktuatorgeschwindigkeit unzureichend ist. Dies bedeutet, dass unterhalb einer bestimmten Grenztemperatur die erfindungsgemäße Kupplungsmomentennachführung aktiviert wird; oberhalb dieser Temperatur wird die Kupplung mit Überanpassung geschlossen.

Um eine zu häufige Kupplungsbetätigung zu vermeiden, kann gemäß der Erfindung diese Voröffnung der Kupplung in Situationen unterbleiben, bei denen ein Bremsvorgang unwahrscheinlich oder unkritisch ist, wie dies beispielsweise bei höheren Drehzahlen oder Gängen der Fall ist.

## Patentansprüche

1. Verfahren zur Kupplungsbetätigung bei niedrigen Temperaturen für ein Kraftfahrzeug mit einer hydraulisch betätigbaren Kupplung, **dadurch gekennzeichnet, dass** unterhalb einer vorbestimmten Temperatur eine situationsabhängige Voröffnung der Kupplung durchgeführt wird, wenn eine Bremsung wahrscheinlich ist.

2. Verfahren nach Anspruch 1, **dadurch gekennzeichnet, dass** die Kupplung derart vorgeöffnet wird, dass geringfügig mehr als das aktuelle Moment des Motors übertragen wird.

3. Verfahren nach einem der vorangehenden Ansprüche, **dadurch gekennzeichnet, dass** die Kupplung dann vorgeöffnet wird, wenn der Fahrer vom Fahrpedal geht.

4. Verfahren nach einem der vorangehenden Ansprüche, **dadurch gekennzeichnet, dass** bei höheren Drehzahlen oder Gängen eine Voröffnung der Kupplung unterbleibt.

## Claims

1. Method for actuating a clutch at low temperatures in a motor vehicle equipped with a hydraulically actuated clutch, **characterized in that** below a preset temperature a situation-dependent pre-opening of the clutch takes place if brake activation is likely.

2. Method according to claim 1, **characterized in that** the clutch is pre-opened to the extent that slightly more than the current torque of the engine is transmitted.

3. Method according to one of the preceding claims, **characterized in that** the clutch is pre-opened when the driver releases the accelerator pedal.

4. Method according to one of the preceding claims, **characterized in that** pre-opening of the clutch does not take place at elevated speeds or higher gears.

## Revendications

1. Méthode d'actionnement d'un embrayage à basses températures sur un véhicule automobile doté d'un embrayage qui peut être actionné hydrauliquement, **caractérisée en ce que** en dessous d'une température prédéfinie est opérée une ouverture avancée de l'embrayage, quand un freinage est probable.

2. Méthode selon la revendication 1, **caractérisée en ce que** l'ouverture avancée de l'embrayage est opérée de façon à ce que le système puisse transmettre un couple légèrement supérieur au couple moteur actuel.

3. Méthode selon une des revendications précédentes, **caractérisée en ce que** l'ouverture avancée est opérée au moment où le conducteur relâche la pédale d'accélérateur.

4. Méthode selon une des revendications précédentes, **caractérisée en ce que** dans les plages de régime et aux rapports supérieurs l'ouverture avancée de l'embrayage n'est pas opérée.
